# EUROPÄISCHE PATENTSCHRIFT

(11) **EP 4 419 415 B1**
(45) Veröffentlichungstag und Bekanntmachung des Hinweises auf die Patenterteilung: **10.06.2026**
(21) Anmeldenummer: 22802608.4
(22) Anmeldetag: 18.10.2022
(51) Int. Cl.: B62J 43/16, B60K 1/04, B60L 50/64, B62J 43/28, B62M 6/90

(54) **BATTERIE-TERMINAL FÜR ZWEIRÄDER MIT ELEKTRISCHER ANTRIEBSEINHEIT**
BATTERY TERMINAL FOR TWO-WHEELED VEHICLES HAVING AN ELECTRIC DRIVE UNIT
COSSE DE BATTERIE POUR DEUX-ROUES À UNITÉ D'ENTRAÎNEMENT ÉLECTRIQUE

(30) Priorität: 19.10.2021 DE 102021211759
(43) Veröffentlichungstag der Anmeldung: 28.08.2024
(73) Patentinhaber: ZF Friedrichshafen AG, 88046 Friedrichshafen (DE)
(72) Erfinder: LAUHOFF, Jakob, 72070 Tübingen (DE)
(74) Vertreter: ZF Friedrichshafen AG
(86) Internationale Anmeldenummer: PCT/EP2022/078889
(87) Internationale Veröffentlichungsnummer: WO 2023/066888

(56) Entgegenhaltungen:
- EP-A1- 2 287 065
- EP-A1- 2 778 031
- EP-A2- 3 088 285
- CN-U- 204 821 902
- DE-A1- 102010 039 850

## Beschreibung

Die Erfindung betrifft ein Batterie-Terminal für Zweiräder mit elektrischer Antriebseinheit, insbesondere E-Bikes, Pedelecs, Elektrofahrräder, Elektromotorräder und Scooter. Die Erfindung betrifft ferner die Anordnung der elektrischen Komponenten eines solchen Zweirads.

Die elektrische Energie für die Antriebseinheit kommt aus einer relativ großen Antriebsbatterie mit relativ hoher Spannung von z. B. 36 V oder 48 V; es fließen vergleichsweise hohe Ströme. Daneben müssen auch kleinere Verbraucher wie Scheinwerfer, Rücklicht, Fernbedienungen am Lenker mit Display oder auch Ladeeinrichtungen für Mobilfunkgeräte mit Strom aus der Antriebsbatterie versorgt werden. Diese Kleinverbraucher werden üblicherweise mit niedrigerer Spannung betrieben, in der Regel 12 V. Die Kleinverbraucher können also nicht direkt an die Hochvolt-Batterie für den Antrieb angeschlossen werden, es muss ein Spannungswandler zwischengeschaltet werden, welcher die Spannung der Antriebsbatterie auf die Versorgungsspannung der Kleinverbraucher herabsetzt.

Sehr oft wird der Spannungswandler in der Antriebseinheit, also in unmittelbarer Nähe des Elektromotors verbaut. In diesem Falle ergibt sich eine Architektur, bei der die Antriebseinheit eine Art Verteilknoten ist, an dem sämtliche elektrischen Verbraucher, also sowohl E-Motor als auch Kleinverbraucher, angesteckt werden. Wenn die Antriebseinheit eine vergleichsweise große und schwere Komponente ist und die Anzahl der Kleinverbraucher gering ist, stellt diese Architektur eine bewährte und gute Lösung dar, insbesondere für E-Fahrräder mit Mittelmotor. Die überwiegende Mehrheit der Pedelecs ist deshalb so gebaut.

Im Trend liegen allerdings Zweiräder, insbesondere E-Bikes, mit immer kleineren Antriebseinheiten und gleichzeitig immer größerer Anzahl von elektrischen Zusatz-Verbrauchern, bis hin zu multifunktionalen elektrischen Schaltungen, beheizbaren Griffen, elektrischen Schlössern und Bedieneinheiten mit großen Bildschirmen. Wird das Vorder- oder Hinterrad mit einem Nabenmotor angetrieben, ist es überhaupt nicht möglich, die Kleinverbraucher zum Zwecke der Stromversorgung an die Antriebseinheit anzuschließen.

Alternativ zur Anordnung des Spannungswandlers in der Antriebseinheit gibt es deshalb schon seit langem auch Architekturen, bei denen der Spannungswandler in der Antriebsbatterie sitzt, zusammen mit dem Batterie-Management-System (BMS). Dies hat den Vorteil, dass die Antriebseinheit (Drive Unit, DU) einschließlich der elektronischen Motorsteuerung kleiner und kompakter gebaut werden kann, weil diese ja nicht mehr die Schnittstellen und Anschlussstecker für die Kleinverbraucher umfassen muss.

Sitzt der Spannungswandler in der Antriebsbatterie, können die einzelnen Kleinverbraucher natürlich nicht mehr alle einzeln direkt an der Antriebsbatterie eingesteckt werden. Die Verteilfunktion wird vielmehr in einen Kabelbaum verlagert. Insbesondere bei stärker motorisierten Zweirädern und E-Motorrädern ist diese Architektur weit verbreitet.

Ein Gleichspannungs-Wandler erzeugt naturgemäß relativ viel Verlustwärme. Deshalb ist es problematisch, insbesondere Spannungswandler für höhere Leistungen mit in die Antriebsbatterie einzubauen. Die Akkuzellen reagieren nämlich empfindlich auf höhere Temperaturen, wie sie ohnehin bei starker Belastung durch die elektrische Antriebseinheit und/oder hohe Ladeströme beim Aufladen der Batterie unvermeidlich entstehen. Ein weiterer Nachteil der Anordnung des Spannungswandlers in der Antriebsbatterie besteht darin, dass der dann notwendige Kabelbaum bei einem modularen Produkt wie einem Pedelec zu einer kaum mehr handhabbaren Varianz, bedingt durch unterschiedliche Rahmengrößen, Ausstattungsvarianten usw., führt. DE 10 2010 039 850 A1 zeigt ein Steuergerät zur Steuerung eines elektrischen Antriebs eines Elektrofahrrads und Verfahren zur Versorgung elektrischer Lasten eines Elektrofahrrads. Dabei wird die Präambel des Anspruchs 1 offenbart. EP 3 088 285 A2 zeigt ein Elektrofahrzeug.

EP 2 287 065 A1 zeigt eine Batteriehalterung.

CN204821902U zeigt ein Elektrofahrzeug mit Ladefunktion für Mobiltelefone.

EP 2 778 031 A1 zeigt ein elektrisches Sattelfahrzeug.

Das technische Problem besteht also darin, die Architektur der elektrischen Komponenten eines Zweirads mit elektrischer Antriebseinheit so zu optimieren, dass sie einerseits eine größere Anzahl von Kleinverbrauchern unterstützt, andererseits aber einfach modular gestaltet werden kann bei gleichzeitig möglichst kompakten Abmessungen der Antriebseinheit und insgesamt geringem Gewicht.

Die Erfindung ist im beigefügten Anspruchssatz beschrieben.

Die Aufgabe wird gelöst durch ein Batterie-Terminal gemäß dem ersten Patentanspruch.

Das erfindungsgemäße Batterie-Terminal hat ein Gehäuse mit einer Steckverbindung für den Anschluss einer Antriebsbatterie, einem Steckanschluss für die elektrische Antriebseinheit sowie einer Anzahl von weiteren Steckanschlüssen für die elektrischen Kleinverbraucher. Der Spannungswandler zum Herabsetzen der Spannung der Antriebsbatterie auf die Versorgungsspannung der Kleinverbraucher sitzt an oder in dem Gehäuse des Batterie-Terminals. Der Spannungswandler sitzt also weder in der Antriebseinheit noch in der Antriebsbatterie, sondern dort, wo normalerweise der Entladestecker platziert ist.

Ein erster Vorteil des erfindungsgemäßen Batterie-Terminals besteht darin, dass weder die elektrische Antriebseinheit noch die Antriebsbatterie mit der Abwärme des Spannungswandlers belastet wird. Ein zweiter Vorteil besteht darin, dass an dem von der Antriebsbatterie körperlich getrennten Batterie-Terminal auch eine größere Anzahl von Anschlüssen bzw. Steckverbindungen für eine Vielzahl von Kleinverbrauchern ihren Platz finden. Damit entfällt ein aufwendiger Kabelbaum mit vielen Verzweigungen und wird ersetzt durch simple dünne Verbindungsleitungen, die von den Kleinverbrauchern direkt zu dem Batterie-Terminal führen.

Der erfindungsgemäße Ansatz, den knappen Bauraum für die Antriebseinheit bzw. die Antriebsbatterie nicht noch für den Spannungswandler zu verbrauchen, sondern den Spannungswandler an einer Stelle unterzubringen, an der genug Platz vorhanden ist, nämlich zwischen Antriebseinheit und Antriebsbatterie, führt zu einer besonders guten Raumökonomie und erleichtert das Design des Zweirads. Auch die Abwärme des Spannungswandlers stört an dieser Stelle nicht und kann problemlos an die Umgebung abgeleitet werden.

Das Batterie-Terminal mit integriertem Spannungswandler kann im Prinzip an beliebiger Stelle des Zweirads angebaut sein. Beansprucht wird jedoch die Ausführung, bei der das Gehäuse eine Vorderseite hat, auf welcher die Steckverbindung für die Antriebsbatterie angeordnet ist, und eine Rückseite, auf welcher der Steckanschluss für die Antriebseinheit und die Steckanschlüsse für die Kleinverbraucher angeordnet sind. Die Steckverbindung für die Antriebsbatterie kann dabei entweder eine rein elektrische Verbindung sein oder auch gleichzeitig als mechanische Verbindung zwischen dem Gehäuse des Batterie-Terminals und der Antriebsbatterie bzw. deren Gehäuse ausgebildet sein. Wesentlich ist, dass das Batterie-Terminal ein von der Antriebsbatterie getrenntes Modul ist.

Der an oder bevorzugt in dem Gehäuse angeordnete Spannungswandler hat vorteilhaft einen Kühlkörper zum Abführen der Verlustwärme. Je nach Größe und Leistung des Spannungswandlers kann es ausreichen, dass die Abwärme des Kühlkörpers über die Wandung des Gehäuses nach außen abgeführt wird. Bei einer besonders vorteilhaften Ausführungsform ragt jedoch der Kühlkörper des Spannungswandlers aus einer Öffnung des Gehäuses ins Freie, sodass auch größere Wärmemengen wirksam abgeführt werden können.

Da, wie erläutert, die Antriebsbatterie möglichst nicht zusätzlich mit Abwärme belastet werden soll, ist die Öffnung für den Kühlkörper zweckmäßig auf der Rückseite des Gehäuses, also auf der der Antriebsbatterie abgewandten Seite angeordnet. Die Rückseite des Gehäuses kann im Wesentlichen von einem Rahmen gebildet sein, welcher die Öffnung für den Kühlkörper umgibt. Dadurch wird der Spannungswandler optimal gekühlt, der nach außen ragende Kühlkörper stört an dieser Stelle nicht und liegt optimal im Fahrtwind. Zweckmäßig sitzen die Steckanschlüsse für die elektrische Antriebseinheit und/oder die elektrischen Kleinverbraucher auf diesem Rahmen, wodurch der aus der Mitte ragende Kühlkörper die zur Verfügung stehende Baulänge optimal ausnutzt.

Die Antriebsbatterien für elektrifizierte Zweiräder haben üblicherweise eine längliche Form und ein Querschnittsprofil, das auf das Rahmenprofil abgestimmt ist. Bevorzugt ist deshalb auch das Gehäuse des Batterie-Terminals an die Querschnittsform der Antriebsbatterie angepasst, sodass das Batterie-Terminal bei angesteckter Antriebsbatterie als Einheit erscheint.

Die relativ schwere und üblicherweise langgestreckte Antriebsbatterie wird oft an einer Tragschiene fixiert, welche am Rahmen des Zweirads befestigbar ist, beispielsweise durch Schrauben. Vorteilhaft sitzt auch das Batterie-Terminal auf dieser Tragschiene bzw. einer entsprechend ausgebildeten Verlängerung. Dadurch können zusätzliche Montagemittel zur Befestigung am Rahmen des Zweirads entfallen.

Das Gehäuse des Batterie-Terminals kann so ausgebildet sein, dass es eine formschlüssige Verbindung mit der Stirnseite der Antriebsbatterie eingeht. Dadurch wirkt das Batterie-Terminal wie eine Verlängerung der Antriebsbatterie und integriert sich auf diese Weise sehr gut in das Design des Zweirads. Außerdem ist das Batterie-Terminal auf diese Weise gleichzeitig Teil des Befestigungsmechanismus der Antriebsbatterie.

Das geschilderte technische Problem wird auch gelöst durch eine Anordnung gemäß

Patentanspruch 10. Die erfindungsgemäße Anordnung umfasst alle elektrischen Komponenten des Zweirads, also elektrische Antriebseinheit, Antriebsbatterie, Kleinverbraucher und zwischen Antriebsbatterie und Antriebseinheit angeordnetes Batterie-Terminal, an oder in welchem der Spannungswandler zum Herabsetzen der Spannung der Antriebsbatterie auf die Versorgungsspannung der Kleinverbraucher angeordnet ist.

Ein Ausführungsbeispiel der Erfindung wird nachstehend unter Bezugnahme auf die beigefügten Abbildungen erläutert. Es zeigen:
- Fig. 1: eine Anordnung der elektrischen Komponenten eines Zweirads, in einem Prinzipbild;
- Fig. 2a: ein Batterie-Terminal mit Spannungswandler gemäß der Anordnung von Fig. 1, in einer perspektivischen Ansicht schräg von vorne;
- Fig. 2b: die Rückseite des Batterie-Terminals von Fig. 2a, perspektivisch.

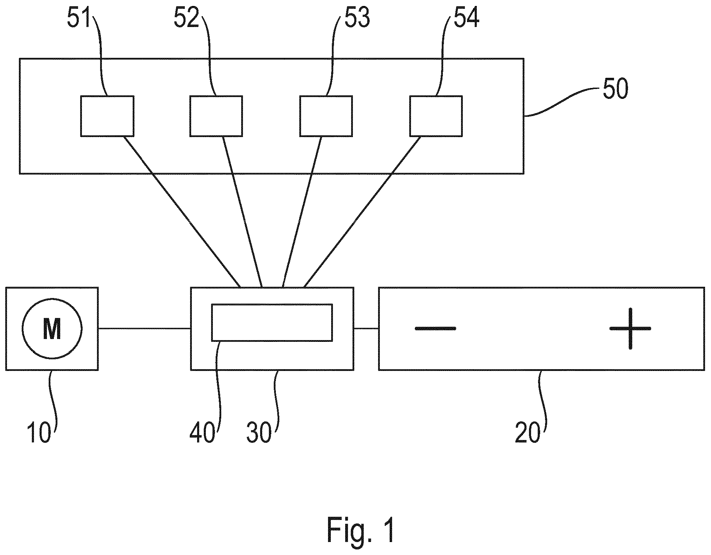

In dem Prinzipbild von Fig. 1 sind beispielhaft die elektrischen Komponenten eines Pedelecs (Pedal Electric Cycle) schematisch dargestellt. Die Anordnung umfasst eine Antriebseinheit 10 bestehend aus einem Gleichstrom-Motor und der zugehörigen Leistungselektronik. Eine Antriebsbatterie 20 versorgt die Antriebseinheit 10 mit Energie. Die Antriebseinheit 10 umfasst eine Anzahl von Akkuzellen und ein elektronisches Batterie-Management-System (BMS), welche gemeinsam in einem kompakten Gehäuse untergebracht sind. Die Antriebsbatterie 20 ist in einigem Abstand von der Antriebseinheit 10 am Rahmen des Pedelecs angeordnet. Die Antriebseinheit 10 ist beispielsweise als Mittelmotor ausgebildet und sitzt als Teil des Tretlagers direkt an der Kurbel des Fahrrads, wohingegen die Antriebsbatterie z. B. am Unterrohr des Rahmens lösbar befestigt ist.

Zwischen der Antriebseinheit 10 und der Antriebsbatterie 20 ist ein Batterie-Terminal 30 angeordnet. Ein Spannungswandler 40 ist in das Batterie-Terminal 30 integriert.

Mehrere Kleinverbraucher 50, hier beispielhaft ein Scheinwerfer 51, ein Rücklicht 52, eine Fernbedienung 53 zur Steuerung und Kontrolle der Antriebseinheit 10 sowie eine weitere elektronische Schaltung 54, sind direkt mit dem Batterie-Terminal 30 elektrisch verbunden.

Die Antriebsbatterie 20 hat beispielsweise eine Nennspannung von 48 V. Der Spannungswandler 40 dient zum Herabsetzen der Spannung auf die Versorgungsspannung der Kleinverbraucher 50, also in der Regel 12 V.

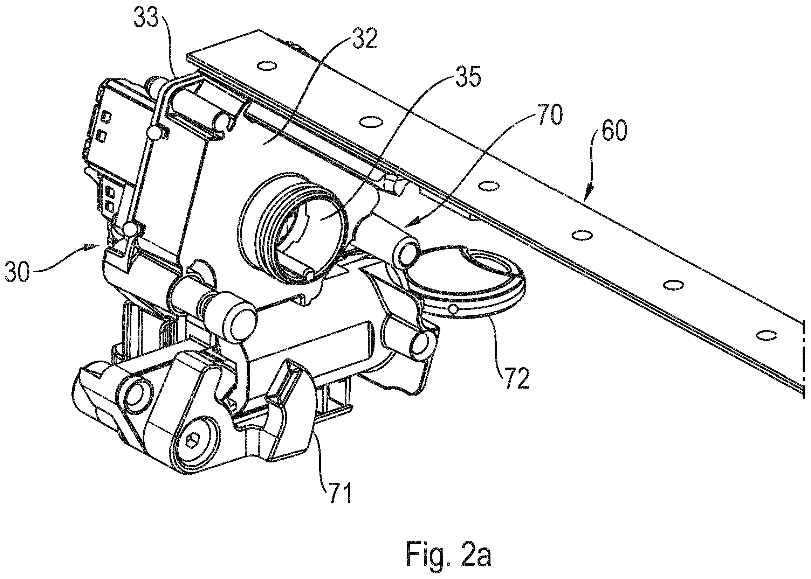

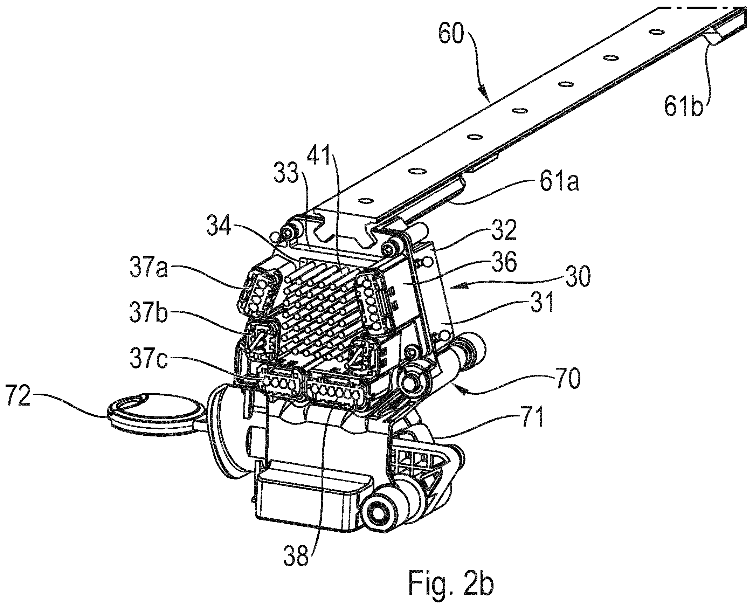

Konstruktive Details des Batterie-Terminals 30 ergeben sich aus den Figuren 2a und 2b.

Das Batterie-Terminal 30 hat ein zweiteiliges Gehäuse 31 bestehend aus einem wannenartigen Unterteil 32 und einem aufgeschraubten Oberteil in Form eines Rahmens 33. Der Rahmen 33 bildet im Wesentlichen die Rückseite des Gehäuses 31 und umrahmt eine große eckige Öffnung 34. Im Inneren des Gehäuses 31 sitzt der (hier nicht sichtbare) Spannungswandler 40. In Fig. 2a ist nur der Kühlkörper 41 des Spannungswandlers 40 zu sehen, welcher aus der Öffnung 34 im Rahmen 33 herausragt, sodass er Kontakt mit der umgebenden Luft hat.

Auf der Rückseite des Gehäuses 31 sitzt in dem Unterteil 32 eine Steckverbindung 35, über die sowohl der elektrische Kontakt mit der Elektronik der Antriebsbatterie 20 (vgl. Fig. 1) hergestellt wird als auch das Gehäuse der Antriebsbatterie 20 mechanisch mit dem Batterie-Terminal 30 verbindbar ist. Auf der Rückseite des Gehäuses 31 (Fig. 2a) sitzt ferner ein Steckanschluss 36, über den die Antriebseinheit 10 (vgl. Fig. 1) mit der Antriebsbatterie 20 elektrisch verbindbar ist. Weitere Steckanschlüsse 37a, 37b, 37c dienen dem elektrischen Anschluss der Kleinverbraucher 50 (vgl. Fig. 1). Ein Verbindungsstecker 38 ist mit einer (nicht dargestellten) Ladebuchse zum Aufladen der Antriebsbatterie 20 verbunden. Der Steckanschluss 36, die weiteren Steckanschlüsse 37a, 37b, 37c sowie der Verbindungsstecker 38 sind am Rand des Gehäuses 31 auf dem Rahmen 33 angeordnet, sodass sie den mittig angeordneten Kühlkörper 41 umgeben.

Das Batterie-Terminal 30 sitzt an der Unterseite einer Tragschiene 60, welche am Rahmen des Zweirads anschraubbar ist. An dieser Tragschiene 60 sind schwalbenschwanzförmige Fixierelemente 61a, 61b ausgebildet, auf welche die (nicht dargestellte) Antriebsbatterie 20 aufschiebbar ist.

Die Kontur des Gehäuses 31 des Batterie-Terminals 30 ist an die Querschnittsform der Antriebsbatterie 20 angepasst. Mit dem Gehäuse 31 verbunden ist eine Aufnahme 70 für die Antriebsbatterie sowie eine Verriegelungseinrichtung 71 mit Schlüssel 72.

### Bezugszeichen

- 10: Antriebseinheit

- 20: Antriebsbatterie

- 30: Batterie-Terminal
- 31: Gehäuse
- 32: Unterteil (Gehäuse)
- 33: Rahmen (Gehäuse)
- 34: Öffnung
- 35: Steckverbindung (Antriebsbatterie)
- 36: Steckanschluss (Antriebseinheit)
- 37a, 37b, 37c: Steckanschlüsse (Kleinverbraucher)
- 38: Verbindungsstecker

- 40: Spannungswandler
- 41: Kühlkörper

- 50: Kleinverbraucher
- 51: Scheinwerfer
- 52: Rücklicht
- 53: Fernbedienung
- 54: elektronische Schaltung

- 60: Tragschiene
- 61a, 61b: Fixierelemente

- 70: Aufnahme (Antriebsbatterie)
- 71: Verriegelungseinrichtung
- 72: Schlüssel

## Patentansprüche

1. Batterie-Terminal für Zweiräder mit elektrischer Antriebseinheit, umfassend ein Gehäuse (31) mit einer Steckverbindung (35) für den Anschluss einer Antriebsbatterie (20), einem Steckanschluss (36) für die elektrische Antriebseinheit (10) und Steckanschlüssen (37a, 37b, 37c) für elektrische Kleinverbraucher (50),
einen an oder in dem Gehäuse (31) angeordneten Spannungswandler (40) zum Herabsetzen der Spannung der Antriebsbatterie (20) auf die Versorgungsspannung der Kleinverbraucher (50), **dadurch gekennzeichnet dass**
das Gehäuse (31) eine Vorderseite hat, auf welcher die
Steckverbindung (35) für die Antriebsbatterie (20) angeordnet ist, und eine Rückseite, auf welcher der Steckanschluss (36) für die Antriebseinheit (10) und die Steckanschlüsse (37a, 37b, 37c) für die Kleinverbraucher (50) angeordnet sind.

2. Batterie-Terminal nach Anspruch 1, wobei der Spannungswandler (40) einen Kühlkörper (41) zum Abführen der Verlustwärme hat.

3. Batterie-Terminal nach Anspruch 2, wobei der Kühlkörper (41) durch eine Öffnung (34) des Gehäuses (31) ins Freie ragt.

4. Batterie-Terminal nach Anspruch 3, wobei die Öffnung (34) für den Kühlkörper (41) auf der Rückseite des Gehäuses (31) angeordnet ist.

5. Batterie-Terminal nach Anspruch 4, wobei die Rückseite des Gehäuses (31) im Wesentlichen von einem Rahmen (33) gebildet wird, welcher die Öffnung (34) für den Kühlkörper (41) umgibt.

6. Batterie-Terminal nach Anspruch 5, wobei die Steckanschlüsse (36, 37a, 37b, 37c) auf dem Rahmen (33) rings um den Kühlkörper (41) angeordnet sind.

7. Batterie-Terminal nach einem der vorhergehenden Ansprüche, wobei die Kontur des Gehäuses (31) an die Querschnittsform der Antriebsbatterie (20) angepasst ist.

8. Batterie-Terminal nach einem der vorhergehenden Ansprüche, wobei das Gehäuse (31) auf einer Tragschiene (60) sitzt, welche am Rahmen des Zweirads befestigbar ist, und die Tragschiene Fixierelemente (61a, 61b) zur lösbaren Befestigung der Antriebsbatterie (20) hat.

9. Batterie-Terminal nach einem der vorhergehenden Ansprüche, wobei das Gehäuse (31) für eine formschlüssige Verbindung mit der Antriebsbatterie (20) ausgebildet ist.

10. Anordnung von elektrischen Komponenten eines Zweirads mit elektrischer Antriebseinheit (10), Antriebsbatterie (20), Kleinverbrauchern (50) und einem zwischen Antriebsbatterie und Antriebseinheit angeordneten Batterie-Terminal (30) mit integriertem Spannungswandler (40) gemäß einem der vorhergehenden Ansprüche.

## Claims

1. Battery terminal for two wheeled vehicles having an electric drive unit, comprising
a housing (31) with a plug connection (35) for connecting a drive battery (20), a plug connector (36) for the electric drive unit (10) and plug connectors (37a, 37b, 37c) for small electrical loads (50),
a voltage converter (40) arranged on or in the housing (31) for reducing the voltage of the drive battery (20) to the supply voltage of the small loads (50), **characterized in that**
the housing (31) has a front side, on which the plug connection (35) for the drive battery (20) is arranged, and a rear side, on which the plug connector (36) for the drive unit (10) and the plug connectors (37a, 37b, 37c) for the small loads (50) are arranged.

2. Battery terminal according to Claim 1, wherein the voltage converter (40) has a heat sink (41) for dissipating the heat loss.

3. Battery terminal according to Claim 2, wherein the heat sink (41) protrudes through an opening (34) in the housing (31) into the open.

4. Battery terminal according to Claim 3, wherein the opening (34) for the heat sink (41) is arranged on the rear side of the housing (31).

5. Battery terminal according to Claim 4, wherein the rear side of the housing (31) is substantially formed by a frame (33) which surrounds the opening (34) for the heat sink (41).

6. Battery terminal according to Claim 5, wherein the plug connectors (36, 37a, 37b, 37c) are arranged on the frame (33) around the heat sink (41).

7. Battery terminal according to one of the preceding claims, wherein the contour of the housing (31) is adapted to the cross sectional shape of the drive battery (20).

8. Battery terminal according to one of the preceding claims, wherein the housing (31) sits on a mounting rail (60) which can be fastened to the frame of the two wheeled vehicle, and the mounting rail has fixing elements (61a, 61b) for detachably fastening the drive battery (20).

9. Battery terminal according to one of the preceding claims, wherein the housing (31) is designed for a form-fitting connection to the drive battery (20).

10. Arrangement of electrical components of a two wheeled vehicle with an electric drive unit (10), drive battery (20), small loads (50) and a battery terminal (30) arranged between drive battery and drive unit with integrated voltage converter (40) according to one of the preceding claims.

## Revendications

1. Borne de batterie pour véhicule à deux roues pourvu d'un groupe propulseur électrique, comportant
un boîtier (31) comprenant une connexion à enfichage (35) pour le raccordement d'une batterie de propulsion (20), un raccord à enfichage (36) pour le groupe propulseur électrique (10) et des raccords à enfichage (37a, 37b, 37c) pour des petits consommateurs électriques (50),
un convertisseur de tension (40) disposé sur ou dans le boîtier (31) pour réduire la tension de la batterie de propulsion (20) à la tension d'alimentation des petits consommateurs (50), **caractérisée en ce que**
le boîtier (31) possède un côté avant sur lequel est disposée la connexion à enfichage (35) pour la batterie de propulsion (20), et un côté arrière sur lequel sont disposés le raccord à enfichage (36) pour le groupe propulseur (10) et les raccords à enfichage (37a, 37b, 37c) pour les petits consommateurs (50).

2. Borne de batterie selon la revendication 1, le convertisseur de tension (40) comprenant un dissipateur thermique (41) destiné à dissiper la perte de chaleur.

3. Borne de batterie selon la revendication 2, le dissipateur thermique (41) faisant saillie vers l'extérieur à travers une ouverture (34) du boîtier (31).

4. Borne de batterie selon la revendication 3, l'ouverture (34) pour le dissipateur thermique (41) étant disposée sur le côté arrière du boîtier (31).

5. Borne de batterie selon la revendication 4, le côté arrière du boîtier (31) étant sensiblement formé par un cadre (33), lequel entoure l'ouverture (34) pour le dissipateur thermique (41).

6. Borne de batterie selon la revendication 5, les raccords à enfichage (36, 37a, 37b, 37c) étant disposés sur le cadre (33) en anneau autour du dissipateur thermique (41).

7. Borne de batterie selon l'une des revendications précédentes, le contour du boîtier (31) est adapté à la forme de la section transversale de la batterie de propulsion (20).

8. Borne de batterie selon l'une des revendications précédentes, le boîtier (31) reposant sur un rail porteur (60), lequel peut être fixé au châssis du véhicule à deux roues, et le rail porteur comprenant des éléments de calage (61a, 61b) destinés à la fixation amovible de la batterie de propulsion (20).

9. Borne de batterie selon l'une des revendications précédentes, le boîtier (31) étant configuré pour une connexion par complémentarité de formes avec la batterie de propulsion (20).

10. Arrangement de composants électriques d'un véhicule à deux roues pourvu d'un groupe propulseur électrique (10), d'une batterie de propulsion (20), de petits consommateurs (50) et d'une borne de batterie (30) disposée entre la batterie de propulsion et le groupe propulseur avec convertisseur de tension (40) intégré selon l'une des revendications précédentes.
